# EUROPEAN PATENT APPLICATION

(11) **EP 0 570 627 A1**
(43) Date of publication of application: **24.11.1993**
(21) Application number: 92121712.1
(22) Date of filing: 19.12.1992
(51) Int. Cl.: F02B 41/04

(54) **Internal combustion engine**

(30) Priority: 19.05.1992 JP 151439/92
(71) Applicant: Nakamura, Hiromu, Ohta-ku, Tokyo (JP)
(72) Inventor: Nakamura, Hiromu, Ohta-ku, Tokyo (JP)
(74) Representative: von Rohr, Hans Wilhelm, Dipl.-Phys.

(57) **Abstract**

A combustion, expansion and exhaust stroke becomes larger than that of an intake and compression strokes of a piston (22) of an internal combustion engine. A mechanical compression ratio can change according to the output of the internal combustion engine in order to attain a high efficiency of the internal combustion engine. The internal combustion engine has a stationary gear (26) enabling to change an angle of the stationary gear (26) according to the output of the internal combustion engine. The stationary gear (26) engages with epicycloidal gears (30) and the epicycloidal gears (30) rotate and revolve along the circumference of the stationary gear (26). A main crank arm (32) is rotatably connected to α center of the epicycloidal gear and the main crank arm (32) is connected to the crank shaft (28) at a center of the stationary gear (26). A subsidiary crank arm (34) is connected to the epicycloidal gear (30) with a certain angle. A free end of the subsidiary crank arm (34) is connected to the connecting rod (24) connected to the piston (22). The reciprocal motion of the piston (22) within the cylinder (20) is transferred to the epicycloidal gears (30) through the connecting rod (24) and the subsidiary crank arm (34), and the epicycloidal gears (30) rotate and revolve along the circumference of the stationary gear (26). The revolution motion of the epicycloidal gear (30) restricts the reciprocal stroke of the piston (22), and the combustion and expansion stroke of the piston increases more than the intake and compression stroke. In addition, the compression ratio changes according to a change of the angle of the stationary gear (26).

## Description

### Background of the Invention

### (Industrial Field)

The present invention relates to an internal combustion engine.

### (Prior Art)

As for the conventional internal combustion engine , for example , a gasoline engine , a capacity of the inner cylindrical space enclosed by the cylinder and a piston changes , and combustible gas or similar fuel or mixture are compressed together with air. Or, in a diesel engine, only air is compressed and then fuel is injected or sprayed at a high temperature and a high pressure. In both cases, the difference between an energy of combustion and expansion stroke and other energy necessary to compress air and fuel or only air is used as a motive power for vehicles.

The compression ratio or a change of the volume of the inner cylindrical space is determined when the engine is designed. Some variable compreesion type internal combustion engines having special mechanism have been known and they have complicated structure, thereby in general they are not so distributed as expected. In addition, volume changes in a compression stroke and a combustion·expansion stroke in the conventional or prevailing internal combustion engine are identical to each other.

In general, in order to improve a thermal efficiency of the internal combustion engine, it is necessary to ignite much air and little fuel with a high compression ratio, or ignite lean fuel.

It is the purpose of the present invention to improve an efficiecy of the internal combustion engine using an effective high compression ratio.

When you want to attain a high compression ratio of the engine, a difficult problem of knocking or abnormal combustion is happened in case of electric spark iginition systems are used in the gasoline engines. In case of compression ignition of the diesel engine, it already reaches the restriction or limit of the highest ration due to a limit of mechanical strength of the engine. In other words or putting it in another way, a high efficiecy of the high compression ratio can attain only by attaining the volume change larger than that in the combustion and expansion stroke. In case of a four-stroke internal combustion engine, and a volume change ratio of its combustion and expansion stroke is larger than that of suction and compression stroke, it is possible to attain an effect identical that in case of a high compression ratio. That is, it is called an effective and practical high compression ratio.

Next, in case of an internal combustion gasoline engine, its output power changes by changing a volume of the mixture of air and fuel at a fixed mixing ratio. As a result, when an output power is low, the volume of the mixture is low, so that the compression ratio becomes lower than that mechanically designed. Thus, the efficiency of the engine will lower or the effective compression ratio decreases.

According to the principle of diesel engine, volume of air to be injected in the cylinder can not be made little because the air is compressed at a high ratio making it of a high temperature. Output of the diesel engine is changed by changing the volume of the injecting fuel.

As a result, the energy used to compress air and fuel doesn't change despite the size of the output power of the diesel engine. The engine is designed to use a small quantity of fuel when the engine outputs low power, and raise the efficiency when the engine uses a high ratio of fuel and air and outputs high power. It is noted that the effect of the diesel engine above differes from that of the gasoline engine burning or combusting lean mixture.

It is possible to operate four-stroke and two-stroke internal combustion engines always with a high efficiency despite the size of their output power when volumes of mixture and air sucked or intaken change according to the size of the output power of the engines. In operation of the engines, it is necessary to make a mechanical compression ratio large when the suction volume is small, or little when the suction volume is much.

### Summary of the Invention

The present invention provides in an internal combustion engine having a cylinder, a piston, a connecting rod connected to said piston, a crank shaft, and a motion converting mechanism for converting a reciprocating motion of the connecting rod to a rotating motion of said crank shaft, an improvement of the motion converting mechanism constructed by a stationary gear provided with the crank shaft placed at its center, an epicycloidal gears revolutable along with its rotation along a circumference of said stationary gear, a main crank arm arranged on a straight line connecting a center of said stationary gear and a center of the epicycloidal gears, the main crank having one end connected to the crank shaft and another end rotatably connected to the center of the epicycloidal gears, a subsidiary crank arm connected to the epicyloidal gear and having a free end rotatably connected to said connecting rod, wherein a combustion, expansion and exhaust stroke of said piston is larger than the suction and compression stroke, and additionally the angle of the stationary gear changes relative to the rotational direction according to change of the output of the internal combustion engine.

Accordingly, it is a general object of the present invention to provide an improvement of the motion converting mechanism constructed by a stationary gear provided with the crank shaft placed at its center, an epicycloidal gears revolutable along with its rotation along a circumference of said stationary gear, a main crank arm arranged on a straight line connecting a center of said stationary gear and a center of the epicycloidal gears, the main crank having one end connected to the crank shaft and another end rotatably connected to the center of the epicycloidal gears, a subsidiary crank arm connected to the epicycloidal gear and having a free end rotatably connected to said connecting rod, wherein a combustion, expansion and exhaust stroke of said piston is larger than the suction and compression stroke.

When the piston of the internal combustion engine of the present invention reciprocates in the strokes of suction or intake, compression, combustion and expansion, and exhaust, the epicycloidal gears rotate and revolute around the stationary gear and the main crank arm rotates. In other words, the reciprocating motion of the piston is converted to a rotation movement of the main crank arm connected to the center of the epicycloidal gear.

The reciprocating motion or stroke of the piston is restricted by the rotation and revolution motions of the epicycloidal gear, so that the piston stroke of combustion, expansion and exhaust is made larger than the piston stroke of intake and compression.

When an angle of rotation direction of the stationary gear changes according to a change of the output of the engine of the present invention, the compression stroke of the piston changes and thereby the mechanical compression ratio changes according to the output.

One of the characteristics of the internal combustion engine according to the present invention resides in a change of the reciprocal strokes of the piston moved within the cylinder. As a result of the change, the stroke of the combustion and expansion increases more than that of the intake and compression, and a high efficiency of the internal combustion engine can be attained. In addition, in the internal combustion engine according to the present invention, the compression ratio of the mixture in the cylinder changes according to a change of the output of the internal combustion engine.

The changes of the strokes of a piston and the compression ratio are carried out by a motion change mechanism consisting of a stationary gear and epicycloidal gears. The stationary gear is supported on a machine frame so as to change the angle along a rotational direction according to a change of the output of the internal combustion engine. The epicycloidal gears engage with the stational gear and revolve along a circumference of the stationary gear with their rotation. The crank arm rotatably is connected to a crank shaft placed at a center of the epicycloidal gear. The subsidiary crank arm is connected to the epicycloidal gear with a certain angle and a free end of the subsidiary crank arm is connected to the connecting rod connected to the piston. A reciprocal motion of the piston within the cylinder is transferred to the epicycloidal gears through the connecting rod and the subsidiary crank arm, and the epicycloidal gears rotate and revolve along a circumference of the stationary gear. A revolving motion of the epicycloidal gear restricts the reciprocal motion of the piston, thus the combustion and expansion stroke of the piston of the internal combustion engine increases than the intake and compression stroke. Furthermore, the compression ratio of mixture changes according to a change in the angle of the stationary gear. In the concrete, when a volume of the intake or intaken mixture is small, the compression ratio becomes large. Vice versa, the larger the volume of mixture intaken is, the smaller the compression ratio of mixture is.

### Brief Description of Drawings

FIG 1 (A) to (D) are explanation views of the operation of the internal combustion engine according to the present invention.

FIG 2 is an operative arrangement of various parts of the internal combustion engine.

FIG 3 (A) and (B), each show mechanisms of the epicycloidal gears and the stationary gear in order to depict an operative principle of one embodiment of the internal combustion engine according to the present invention.

FIG 4 (A) and (B), each depict an operative principle of another embodiment of the present invention.

FIG 5 shows an operative arrangement of various parts of the embodiment of the internal combustion engine shown in FIG 4.

FIG 6 (A) and (B), each depict an operative principle of another embodiment of the present invention.

FIG 7 shows an operative arrangement of various parts of the embodiment of the internal combustion engine shown in FIG 6.

### Preferred Embodiment of the Invention

The construction of the present invention will be described with reference to the embodiments shown in the accompanying drawings.

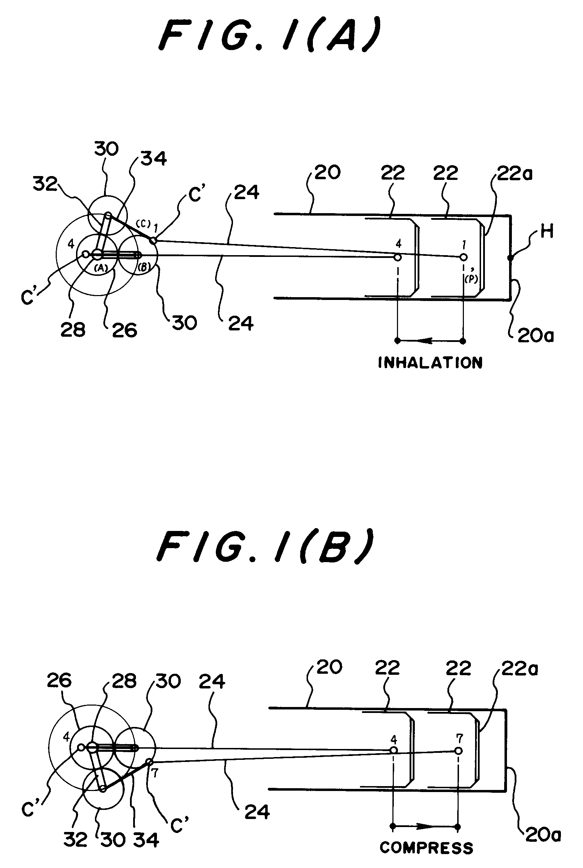

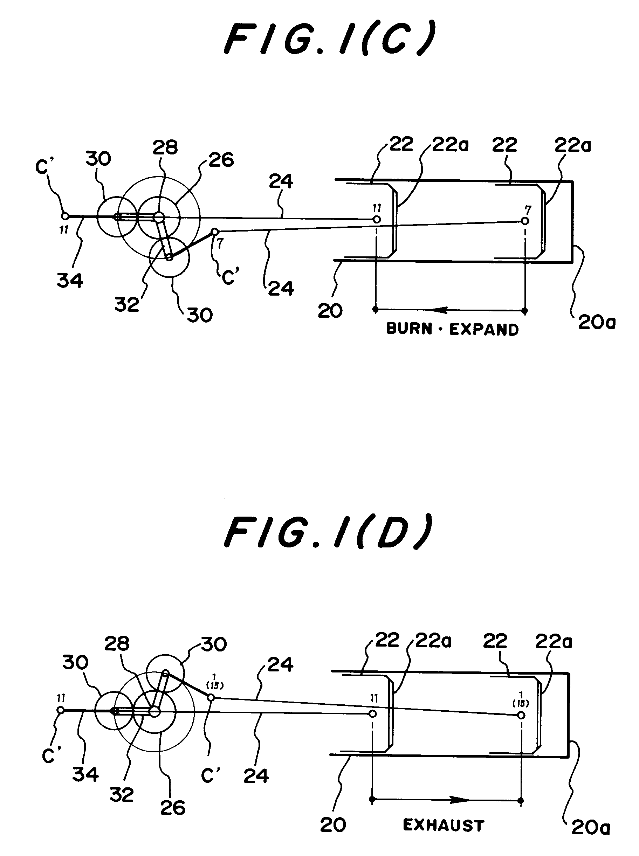

As shown in FIG 1(A),(B),(C) and (D), depicting one of the embodiments, the internal combustion engine of the present invention has a cylinder 20, a piston 22 slidable in the cylinder, and a connecting rod 24 provided with an end connected to a piston pin P.

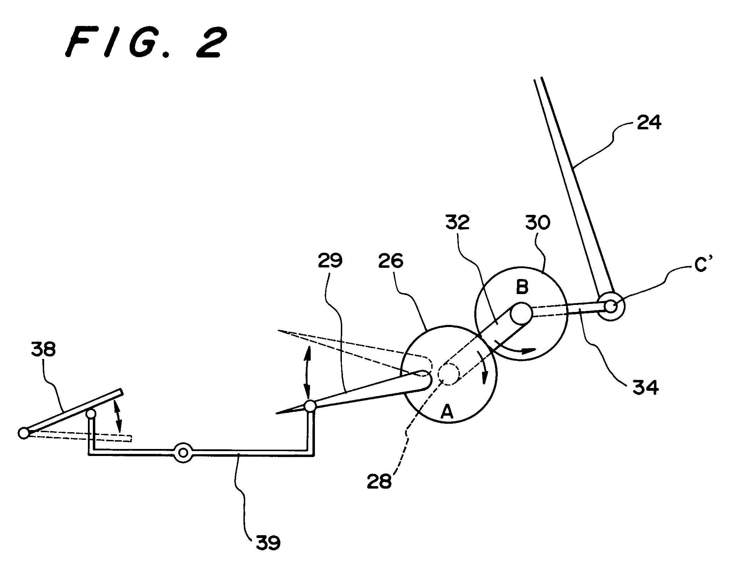

A stationary gear 26 is supported on a machine grame (not shown) through an inner diameter portion of the stationary gear. At the center of the stationary gear 26, there is a crank 28 rotatably supported on the machine frame (not shown). A stabilizer 29 protrudes from the stationary gear 26. When the stabilizer 29 oscillates, the angle of the stationary gear 26 changes (FIG 2).

The stationary gear 26 engages with one epicycloidal gear 30 having the diameter identical with the stationary gear 26. The epicycloidal gear 30 is journalled with the main crank arm 32 so as to rotate and revolve around the circumference of the stationary gear 26.

One end of the main crank arm 32 is connected to the crank shaft 28 and another end of the main crank arm 32 is rotatably connected to a central shaft of the epicycloidal gears 30.

One end of a subsidiary crank shaft 34 is secured at an appropriate angle to the epicycloidal gear 30. An extended axis of the subsidiary crank arm 34 is adapted to be set so as to pass the center 02 of the epicycloidal gear 30. One end of the connecting rod 24 is rotatably connected to a crank pin C' formed at a front end of the crank arm 34.

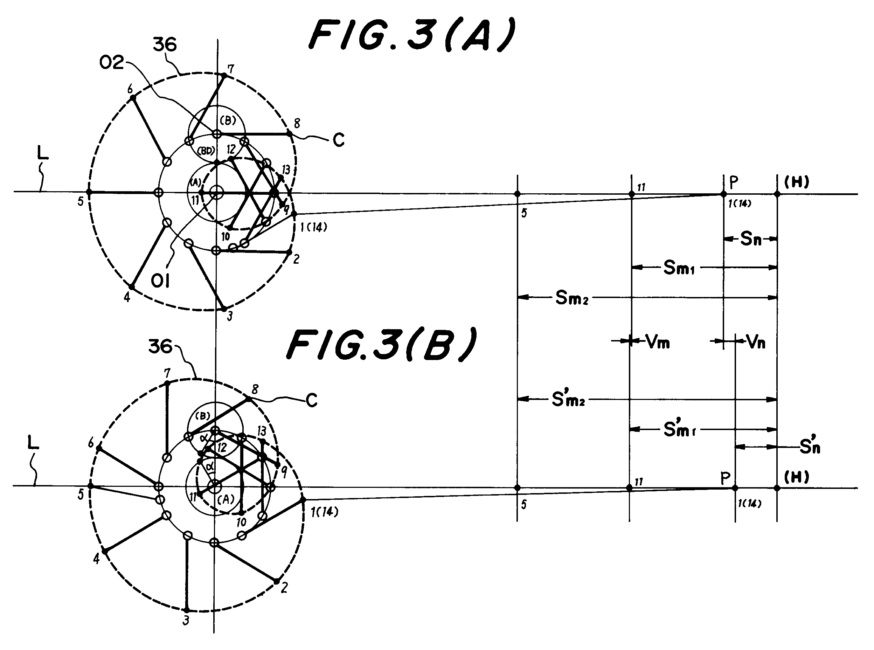

FIG 3 is an explanation view showing an operative principle of the internal combustion engine according to the present invention,

In FIG 3, a straight line L is a straight line segment extending through a center H of the cylinder head 20a, a center point P of the piston pin P', and a central point 01 of the stationary gear 26, These points A and H are stationary and the point P can move along only the straight line L, FIG 3 shows a condition in which an addendum circle B of the epicycloidal gear 30 circumscribes with a root circle A of the stationary gear 26 and the addendum circle B rotates, not slides, along the circumference of the root circle A. A line CP connecting a central point c of the crank pin C' and the central point P of the piston pin p' is fixed in its length.

When a diameter of the root circle A is a and another diameter of the addendum circle B is b, a = b is set in FIG 3 (A) and (B).

A line segment 02 to C corresponding to the subsidiary crank arm 34 is secured to the addendum circle B and the line segment 02 to C rotates together with a rotation of the addendum circle B. When the root circle A or the stationary gear 26 rotate as shown in FIG 3 (B) by an angle α, the addendum circle B simultaneously rotates by the angle α. In FIG 3, a broken line 36 shows a trace of motion of the point C or the crank pin C', and the figures 1, 2, 3 ... shown on the line of trace indicate the order of movement of the point C.

In the four-stroke internal combustion engine of the present invention, the point C moves in the order of the figures 1, 2, 3 ... along the broken line 36 according to the strokes of intake, compression, combustion and expansion, and exhaust. FIG 1 (A) shows an intake stroke, FIG 1 (B) a compression stroke, FIG 1 (C) a combustion expansion stroke, and FIG 1 (D) an exhaust stroke. In FIG 3, Sn shows a distance between the top dead center of the piston head 22a during a compression stroke with the most intake volume and the cylinder head 20a. In addition, in FIG 3, the positions of the piston pin P and the piston head 22a are shown by the same point P.

Sm1 depicts the distance between a cylinder head 20a and the bottom dead center of the piston head 22a while an intake stroke is carried out with the most intake volume.

Sm2 shows the distance between the bottom dead center of the piston head 22a during a combustion and expansion stroke while the most volume is intaken and the cylinder head 20a.

S'n shows the distance between the cylinder head 20a and the top dead center of the piston head 22a while a compression stroke and the cylinder head 20a when the intake volume is restricted or the stationary gear 26 rotates or displaces by an angle α.

S'm1 shows the distance between the bottom dead center of the piston head 22a while an exhaust stroke with a restricted intake volume, and the cylinder head 20a.

S'm2 shows the distance between the bottom dead center of the piston head 22a while a combustion and expansion stroke with a restricted intake volume, and the cylinder head 20a.

Vn shows a difference between the top dead centers of the piston head 22 in a compression stroke of these cases of the most intake volume and a restricted intake volume.

Vm shows a difference between the piston heads 22a when the most volume is intaken and an intake volume is restricted. Vn shows a change of mechanical compression ratio happened according to change of an intake volume or of the output power. Changes of the output of the internal combustion engines of the present invention are happened with displacements of an accelerator pedal 38 shown in FIG 2. The displacement of the accelerator pedal 38 is transferred to the stationary gear 26 through the stabilizer 29 installed on the stationary gear 26 and a link 39. As a result, the angle α of the stationary gear 26 along its rotational direction changes, and the change of the angle α changes the compression ratio of the internal combustion engines of the present invention.

As apparent from the decription above, as for the case of four-stroke internal combustion engines, each provided with the construction of the present invention, the ratio of volume change in the combustion and expantion stroke is larger than that of the intake and compression stroke volume change. That is, the combustion and expantion stroke shown in FIG 1C is made larger than the intake and compression stroke shown in FIG 1 (A) and FIG 1 (B).

This means that fewer energy necessary to compress fuel and air creates a larger motive energy with a larger rate of expansion.

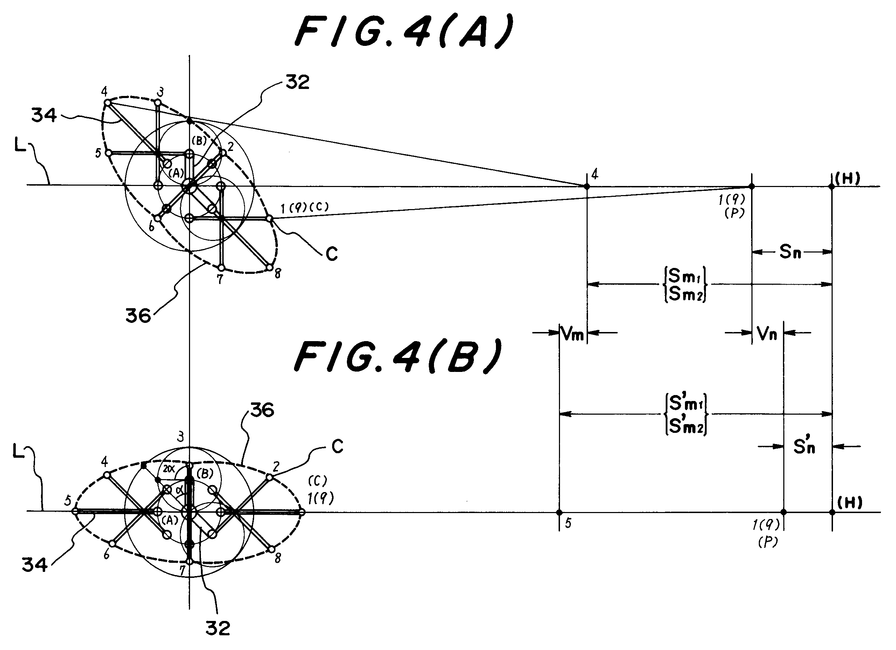

FIG 4 shows a two-stroke internal combustion engine having epicycloidal gears inner-engaged with the stationary gear. According to the construction of the internal combustion engine, it is impossible to change the volumes of an intake and compression stroke and of a combustion, expansion and exhaust stroke. However, it is possible to change the mechanical or designed compression ratio, when mixture and air intaken change according to the scale of the output power, in order to obtain a high practical compression ratio.

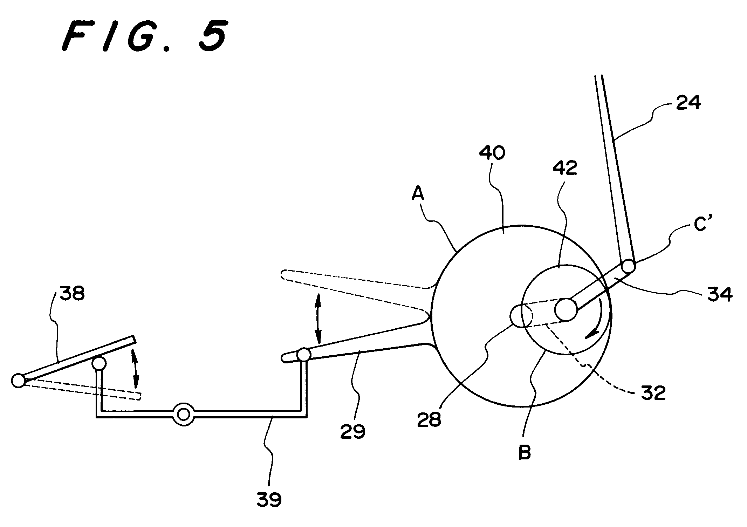

Next, another embodiment provided with a stationary gear inner-engaged with the epicycloidal gears will be described with reference to FIGS 4 and 5.

A is a root circle of a stationary inner gear 40 rotatably journalled on the machine frame, The stationary inner gear 40 engages with one of the epicycloidal gears 42. An addendum circle of the epicycloidal gears 42 is shown by a reference numeral B. A ratio of the diameters of the root circle A and the addendum circle B is set to 2 to 1.

When the diametrical ratio is 3 to 1, a four-stroke internal combustion engine can be obtained. One end of a main crank arm 32 is placed at a center of the inner diameter portion of the stationary gear 40 and connected to the crank shaft 28 rotatably journalled on the machine frame. Another end of the main crank arm 32 is rotatably connected to the center of the epicycloidal gear 42.

A crank arm 34 is secured to the epicycloidal gear 42 at the angle determined so as to pass through the extending axis line of the subsidiary crank arm 34 through the center of the epicycloidal gear 42. As shown in FIG. 5, the stabilizer 29 protrudes from the stationary gear 40 and the stabilizer 29 is connected to the accelerator pedal 38 through a connecting link 39.

The stationary gear 40 is adapted to change the angle α of the stationary gear 40 according to the change of the output of the internal combustion engine or displacement of the accelerator pedal 38.

When the angle along the rotation direction of the stationary gear 40 changes by an angle α, the epicycloidal gear 42 or its addendum circle B cooperatively rotate by an angle of 2α as shown in FIG. 4 (B). A movement trace 36 of the crank pin C' is shown in FIG. 4 (B).

Sm1 and Sm2 of the two-stroke internal combustion engines of the present invention are identical to each other. When the angle α of the stationary gear 40 changes, Sn changes and becomes S'n, and the mechanical compression ratio changes.

According to the present invention, as described above, it is possible to make the stroke of combustion, expansion and exhaust longer than the intake and compression stroke in order to obtain much motive energy with a little energy necessary to compress the mixture and air and a larger expansion rate, and eventually a relatively large compression ratio.

Because that it is possible to easily change the mechanical compression ratio according to the change of output or of intake volume, a high compression ratio according to the intake volume and a more motive energy.

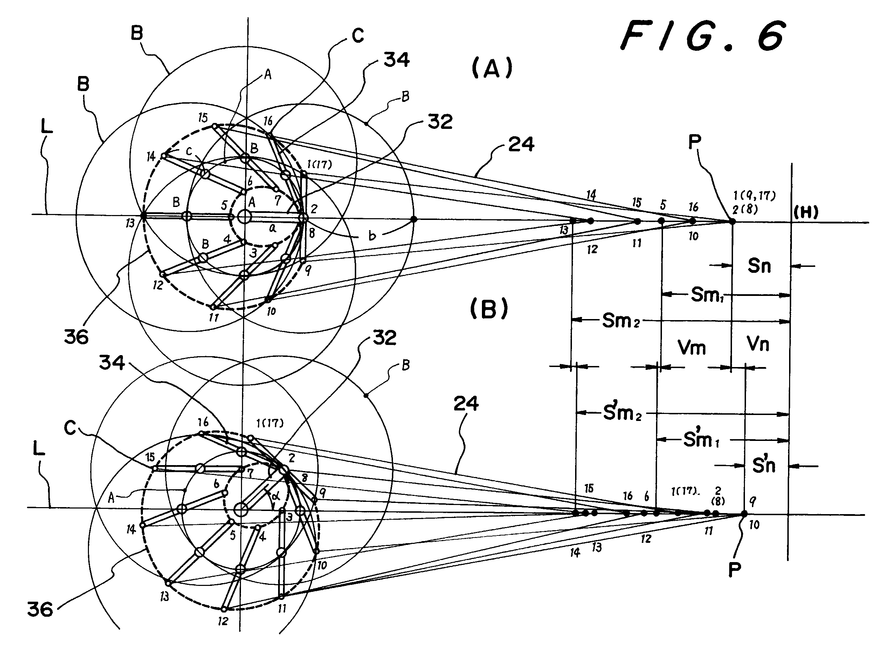

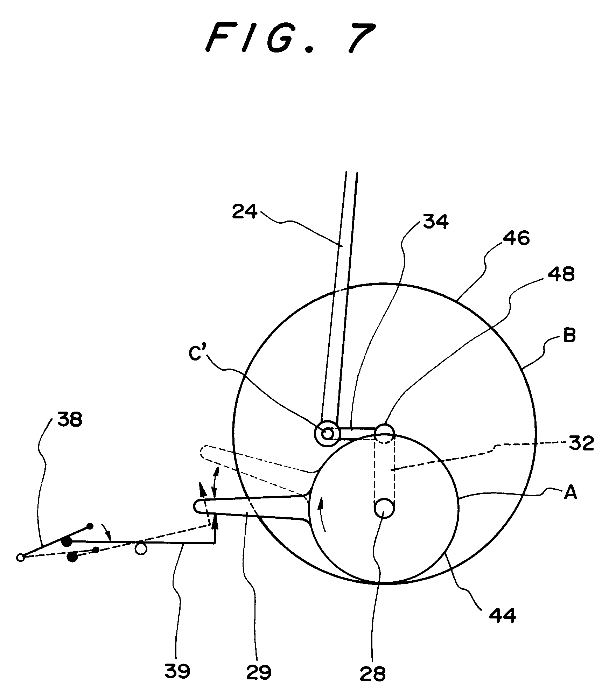

FIG. 6 and FIG. 7 show an embodiment of the four stroke internal combustion engine in which the larger diameter internal tooth planetary gear 46 is inscribed on the smaller diameter stationary gear 44 and the gears are meshed.

In the drawings, A denotes an addendum circle of the stationary gear 44 rotatably journal led on the machine frame, and B denotes a root circle of the internal tooth planetary gear 46. Assuming that the radius of the circle A is a, and the radius of the circle B is b, 2a = b is set.

Reference numeral 32 denotes a main crank arm, and its one end is connected to a crank shaft 28 rotatably journalled on the machine frame which is positioned at the center of the inside diameter portion of the stationary gear 44. The center 48 of the planetary gear 46 is rotatably journalled on the other end of the main crank arm 32 so that the planetary gear 46 rotates along the external periphery of the stationary gear 44 and revolves round thereof. The planetary gear 46 performs the rotation once while two revolutions are taken place.

Reference numeral 34 denotes a sub crank arm, and its one end is fixed to the planetary gear 46 at a proper angle. One end of the sub crank arm 34 or its extention axis is positioned at the center 48 of the planetary gear 46. The other end of the sub crank arm 34 is rotatably connected to the other end of a connecting rod 24 by means of a crank pin C'.

On the stationary gear 44, a stabilizer 29 is projected as shown in FIG. 7, and the stabilizer 29 is connected to an accelerating pedal 38 by means of a connecting link 39.

The stationary gear 44 is constructed in such a way that the angle α against its standard angle changes according to the displacement of the accelerating pedal 38, namely , the change of an output of the internal combustion engine.

In FIG. 6, a broken line 36 shows a transfer locus of the center point C of the crank pin C', and digits 1, 2, 3, ... on the line show an order of the locus of the transferred point C.

Also, the digit attached to each point on the straight line L corresponds to the digit showing the order of the locus of the point C, and each point on the staraight line L attached with the digit shows the position of the center point P of the piston pin P'.

In the foregoing four stroke internal combustion engine, the point C transfers with the order shown with the digits along the broken line 36 according to the strokes of induction, compression, combustion expansion and exhaust.

As will be obvious from the operation explanatory drawing of FIG. 6 , in this embodiment, the ratio of volume change of combustion and expansion becomes larger than the ratio of volume change of induction and compression.

Furthermore, Vn in FIG. 6 shows the change of mechanical compression ratio according to the change of volume of induction, namely, the change of output. For reference, with respect to the meaning of codes in FIG. 6 identical with codes in FIG. 3, for example, Sn, Sm1 and the like, the explanation is given already so that the description thereof os hereby omitted.

## Claims

1. In an internal combustion engine having a cylinder, a piston, a connecting rod connected to said piston, a crank shaft, and a motion converting mechanism for converting a reciprocating motion of the connecting rod to a rotating motion of said crank shaft, **characterised in that** in the motion converting mechanism a stationary gear is provided with the crank shaft placed at its center, an epicycloidal gears revolutable along with its rotation along a circumference of said stationary gear, a main crank arm arranged on a straight line connecting a center of said stationary gear and a center of the epicycloidal gears, the main crank arm having one end connected to the crank shaft and another end rotatably connected to the center of the epicycloidal gears, a subsidiary crank arm connected to the epicycloidal gear and having a free end rotably connected to said connecting rod, wherein a combustion, expansion and exhaust stroke of the piston is larger than the suction and compression stroke.

2. The internal combustion engine according to claim 1, wherein said stationary gear is a toothed wheel provided with teeth formed on its outer periphery and the epicycloidal gears engages with the outer periphery of the stationary gear.

3. The internal combustion engine set forth in claim 2 characterized in that the planetary gear ist made to be the internal tooth gear whose diameter is larger than that of the stationary gear.

4. The internal combustion engine according to claim 1, wherein the angle of rotation direction of the stationary gear is adapted to change according to change of the output of said internal combustion engine and a mechanical compression ratio of the internal combustion engine is adapted to change according to such angle change.

5. In an internal combustion engine having a cylinder, a piston, a connecting rod connected to said piston, a crank shaft, and a motion converting mechanism for converting a reciprocating motion of the connecting rod to a rotating motion of said crank shaft, an improvement of the motion converting mechanism comprising a stationary inner gear provided with teeth formed along its inner circumference, said stationary inner gear angle changing according to change of the output of the internal combustion engine and said stationary inner gear having the crank shaft placed at its center, an epicycloidal gear engaging with the stationary inner gear, rotating along the inner circumference of the inner stationary gear, and revolutable, a main crank arm arranged on a straight line connecting a center of the inner stationary gear and a center of said epicycloidal gear, said main crank having an end portion connected to said crank shaft and another end portion rotatably connected to the center of the epicycloidal gears, and a subsidiary crank arm connected to the epicycloidal gears, a free end of the subsidiary crank arm being rotably connected to the connecting rod, wherein a mechanical compression ratio of the internal combustion engine is adapted to change according to change of the output of the internal combustion engine.
